# FASCICULE DE BREVET EUROPEEN

(11) **EP 0 848 018 B1**
(45) Date de publication et mention de la délivrance du brevet: **19.03.2003**
(21) Numéro de dépôt: 97402945.6
(22) Date de dépôt: 05.12.1997
(51) Int. Cl.: C08F 8/30

(54) **Polymère comportant un cycle succinimide substitué sur l'azote par un groupement réactif**
Polymere mit am Stickstoff mit reaktiven Gruppen substituierten Bernsteinsäureimid-Ringen
Polymers containing reactive groups substituted succinimide rings on nitrogen

(30) Priorité: 12.12.1996 FR 9615471
(43) Date de publication de la demande: 17.06.1998
(73) Titulaire: INSTITUT FRANCAIS DU PETROLE, 92852 Rueil-Malmaison Cedex (FR)
(72) Inventeur: Camberlin, Yves, 69300 Caluire (FR); Hauviller, 69230 Saint Genis Laval (FR); Gonzalez, Serge, 69150 Decines (FR)

(56) Documents cités:
- EP-A- 0 379 942
- DE-A- 4 332 734
- DE-A- 4 333 670
- US-A- 4 113 694
- US-A- 4 962 149

## Description

La présente invention concerne des polymères contenant au moins un cycle succinimide substitué sur l'azote par un groupement réactif, ledit cycle étant supporté soit par la chaîne principale, soit par une chaîne latérale.

Les polymères de la présente invention ont des propriétés améliorées par rapport aux polymères ne comportant pas de cycle succinimide substitué sur l'azote par un groupement réactif. Ils ont en particulier de meilleures propriétés adhésives et peuvent ainsi être employés comme revêtements de surface. Ils ont également une meilleure tenue thermique que les polymères dont ils dérivent.

Les polymères de la présente invention possèdent des groupes réactifs qui permettent leur utilisation pour la fabrication d'alliages de polymères.

Le document DE-A-44 32 734 divulgue des polymères de propylène greffés par un composé monomaléimide basés sur un mélange :
a) d'un copolymère du propylène et d'une proportion de 0,1 à 15 % en poids d'un autre alcène-1 de 2 à 10 atomes de carbone et
b) d'un copolymère du propylène et d'une proportion de 15 à 80 % en poids d'un autre alcène-1 de 2 à 10 atomes de carbone.

Le document DE-A-44 33 670 divulgue des polymères de propylène greffés par un composé monomaléimide du même type que les précédents, mais dans lesquels le constituant a) du mélange consiste en un homopolymère du propylène.

Les polymères de la présente invention peuvent être définis comme étant des polymères consistant en une polyoléfine choisie parmi les polyéthylènes ayant une densité de 0,9 à 0,97 et les copolymères d'éthylène constitués de 90 % au moins d'éthylène et de 10 % au plus d'au moins une oléfine en C3 à C8, ladite polyoléfine contenant, supporté soit par la chaîne principale, soit par une chaîne latérale, au moins un cycle succinimide substitué sur l'azote par un groupement réactif de formule -R-(X)ₙ dans laquelle X représente un groupement réactif choisi parmi un groupe hydroxyle, un groupe carboxylique, un groupe carboxamide, un groupe halogénure d'acide carboxylique, un groupe thiol, un groupe thio-carboxylique, un groupe amino, un halogène, un groupe époxy et un groupe carboxylique estérifié dont la partie ester comporte un groupe réactif, n un nombre égal ou supérieur à 1 et R est un reste comportant au moins un atome de carbone. Le plus souvent n est égal à 1 et, dans ce cas, le composé comportant un cycle maléimide utilisé dans le cadre de la présente invention est représenté par la formule (I) ci-après :

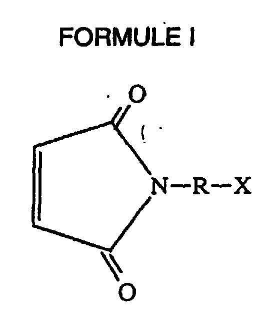

Dans le cas où plusieurs groupes X sont présents, ils peuvent être identiques entre eux ou différents.

Ce groupe réactif est le plus souvent choisi parmi les groupes capables de réagir avec les fonctions époxydes par ouverture du cycle oxiranne. On utilise très souvent des composés comportant un groupe réactif choisi parmi le groupe carboxylique, le groupe carboxamide et un groupe halogénure d'acide, par exemple un groupe chlorure d'acide carboxylique. Le groupe préféré est le groupe carboxylique.

Le groupe -R- est habituellement choisi parmi les groupes hydrocarbonés aliphatiques, saturés ou insaturés, substitués ou non, et les groupes aromatiques substitués ou non substitués. On préfère généralement des groupes non substitués et le plus souvent des groupes comportant au moins un noyau aromatique. A titre d'exemples de groupes que l'on trouve très fréquemment, on peut citer les groupes benzéniques reliés en ortho, méta ou para d'une part à l'atome d'azote et d'autre part au groupe réactif -X. On utilise le plus souvent la forme liée en para ou celle liée en méta.

Les polyoléfines employées pour fabriquer les polymères de la présente invention peuvent être formées par homopolymérisation ou par copolymérisation d'au moins deux monomères.

Selon l'invention, la polyoléfine de base des polymères est choisie parmi les polyéthylènes ayant une densité de 0,9 à 0,97 et les copolymères d'éthylène constitués de 90 % au moins de motifs éthylène et de 10 % au plus d'une oléfine en C3 à C8. On utilisera plus particulièrement les polyéthylènes ayant une densité de 0,9 à 0,97 et un indice de fusion mesuré selon la norme ASTM D-1238 d'environ 0,2 à environ 100 (mesure effectuée sous 19,6 kg à 190°C).

Les polymères de la présente invention sont préparés par mise en contact de la polyoléfine à l'état fondu avec au moins un composé comportant un cycle maléimide substitué sur l'azote par un groupement réactif, au sein d'un mélangeur ou dans une extrudeuse. Cette préparation peut être effectuée avec ou sans amorceur radicalaire. A titre d'exemples d'amorceurs radicalaires, on peut citer les peroxydes. Dans le cadre de la présente invention, on préfère habituellement travailler sans amorceur radicalaire. Cette possibilité de formation sans amorceur radicalaire de polymères contenant un cycle succinimide substitué sur l'azote par un groupement réactif, ledit cycle étant supporté soit par la chaîne principale, soit par une chaîne latérale, est un avantage certain de la présente invention, qui permet d'éviter les risques de coupures et les risques de réticulation du polymère. La température de la réaction est habituellement comprise entre environ la température de fusion de la polyoléfine et environ 300°C. Le plus souvent cette température est d'environ 200°C à environ 260°C. La durée de la réaction est relativement faible et ne dépasse pas habituellement 10 minutes. On préfère habituellement utiliser le système par extrusion-réaction qui donne de très bons résultats.

La présente invention concerne aussi l'utilisation des polymères décrits ci-dessus pour la fabrication de revêtements de surface. Ces polymères ayant de bonnes propriétés d'adhésion conviennent mieux à cette utilisation que les polyoléfines de départ. Ces polymères peuvent aussi être employés pour la fabrication d'alliages de polymères dans lesquels la fonction réactive améliore la formation desdits alliages. Ils peuvent également servir à la fabrication de produits par co-extrusion. Ils peuvent aussi être employés pour la fabrication de matériaux multicouches.

Les exemples suivants illustrent l'invention sans en limiter la portée.

### Exemple 1.

Dans cet exemple, on décrit la préparation d'un polymère greffé dans un mélangeur.

On introduit 42,5 grammes (g) de polyéthylène de moyenne densité (d = 0,954) commercialisé par la société FINA sous la référence Finathène 3802® et 0,42 g d'acide 4-maléimidobenzoïque (AMB) dans un mélangeur interne de marque Haake Rhéocord®. La température de travail est de 240°C, la vitesse de rotation des pales est de 64 tours/minutes (tr/min). Après 5 minutes de mélange à 240°C, le produit de la réaction est refroidi dans l'eau, séché à 60°C sous 1 millimètre (mm) de mercure pendant 8 heures. Le produit obtenu est utilisé pour des tests d'adhésion dont les résultats figurent dans le tableau 1 ci-après.

### Exemple 2.

On répète la procédure décrite dans l'Exemple 1 en utilisant 1,7 g d'AMB, soit 2,5 % en poids. Le produit obtenu est utilisé pour des tests d'adhésion dont les résultats figurent dans le tableau 1 ci-après.

### Exemple 3.

Dans cet exemple, on décrit la préparation d'un polymère greffé en utilisant une extrudeuse co-rotative bi-vis CLEXTRAL, vendue sous la référence BC21, dont le rapport longueur/diamètre est de 28, dont les vis ont un diamètre de 25 mm et qui est équipée d'une filière de 4 mm de diamètre.

On introduit simultanément dans la trémie d'alimentation de l'extrudeuse les granulés de polyéthylène Finathène 3802® et une quantité correspondant à 1 % en poids d'AMB par rapport au polyéthylène.

Le débit total de produits introduits dans l'extrudeuse est de 5 kg/heure et la température de réaction au sein de l'extrudeuse est maintenue à 240°C. La vitesse de rotation des vis est de 100 tr/min, le temps de séjour est de 1 minute. Le jonc qui sort de la filière est refroidi dans de l'eau à 25°C, granulé et séché pour les tests d'adhésion.

### Exemple 4.

On répète la procédure décrite dans l'Exemple 3 en utilisant 2 % en poids d'AMB. Le produit obtenu après granulation et séchage est utilisé pour des tests d'adhésion dont les résultats figurent dans le tableau 1 ci-après.

### Exemple 5.

On effectue avec divers produits des tests d'adhésion sur éprouvettes métalliques en aluminium.

Les propriétés d'adhésion des compositions sont déterminées selon la méthode ASTM D-1002.

La procédure de test suivie comprend la préparation des éprouvettes métalliques. On prépare 600 cm³ de mélange sulfochromique, on place une série d'éprouvettes sur un support et on les immerge dans un récipient contenant le mélange sulfochromique maintenu à une température de 60°C. Après 15 min, on retire les éprouvettes. Elles sont rincées abondamment à l'eau et séchées en étuve 2 heures à 80°C.

On délimite sur une éprouvette une surface de collage de 25,4 x 12,7 mm et à l'aide de cales, une épaisseur maximum du joint de colle de 125 x 10⁻⁶ m. Le collage des deux éprouvettes est effectué à l'aide d'une presse à plateaux DARRAGON préchauffée à 200°C avec application d'une pression de 0,5 MPa pendant 5 min.

On réalise ensuite un test de traction sur une machine de type INSTRON, équipée d'une tête de mesure de 10⁵ Newton. La vitesse de déplacement de la traverse 1 mm/min.

Les résultats des essais des tests de collage sont mentionnés dans le tableau 1 ci-après. Les valeurs données correspondent à la valeur moyenne obtenue sur 10 essais successifs. A titre de comparaison, des tests ont été effectués sur le polyéthylène de moyenne densité PEHD Finathène 3802® et avec un terpolymère vendu par la société ORKEM sous la référence Lotader 3210® de masse moléculaire moyenne en nombre de 15 050 et d'indice de polydispersité de 5,3.

**TABLEAU 1**

| Nature du polymère testé | Charge à la rupture en kiloNewton (kN) | Nature de la rupture |
|---|---|---|
| PEHD | 2,1 | adhésive |
| Lotader 3210® | 2,7 | adhésive |
| Produit de l'exemple 1 | 4,2 | cohésive |
| Produit de l'exemple 2 | 3,9 | cohésive |
| Produit de l'exemple 3 | 4,3 | cohésive |
| Produit de l'exemple 4 | 4,0 | cohésive |

On constate l'augmentation importante de la charge maximale nécessaire pour provoquer la rupture par emploi des produits de la présente invention, ainsi que la différence de nature de la rupture qui se fait dans la masse, ce qui démontre l'amélioration importante de l'adhésion obtenue avec les produits de l'invention.

## Revendications

1. Polymère consistant en une polyoléfine choisie parmi les polyéthylènes agant une densité de 0,9 à 0,97 et les copolymères d'éthylène constitués de 90 % au moins d'éthylène et de 10 % au plus d'au moins une oléfine en C3 à C8, ladite polyoléfine contenant, supporté soit par la chaîne principale, soit par une chaîne latérale, au moins un cycle succinimide substitué sur l'azote par un groupement réactif de formule -R-(X)ₙ dans laquelle X représente un groupement réactif choisi parmi un groupe hydroxyle, un groupe carboxylique, un groupe carboxamide, un groupe halogénure d'acide carboxylique, un groupe thiol, un groupe thio-carboxylique, un groupe amino, un halogène, un groupe époxy et un groupe carboxylique estérifié dont la partie ester comporte un groupe réactif, n un nombre égal ou supérieur à 1 et R est un reste comportant au moins un atome de carbone.

2. Polymère selon la revendication 1 dans lequel le groupe -R- est choisi parmi les groupes hydrocarbonés aliphatiques, saturés ou insaturés, substitués ou non, les groupes aromatiques substitués ou non substitués.

3. Polymère selon l'une des revendications 1 et 2 dans lequel le groupe -R- est un reste benzénique et le groupe -X est en position para par rapport à l'atome d'azote.

4. Polymère selon l'une des revendications 1 à 3 dans lequel le groupe -X est un groupe carboxylique.

5. Polymère selon l'une des revendications 1 à 4 dans lequel la polyoléfine est un polyéthylène ayant une densité de 0,9 à 0,97 et un indice de fusion mesuré selon la norme ASTM D-1238 de 0,2 à 100 sous 19,6 kg à 190°C.

6. Procédé de préparation d'un polymère selon l'une des revendications 1 à 5 **caractérisé en ce qu'**il est obtenu par mise en contact de la polyoléfine à l'état fondu avec au moins un composé comportant un cycle maléimide substitué sur l'azote par un groupement réactif au sein d'un mélangeur ou dans une extrudeuse.

7. Utilisation d'au moins un polymère selon l'une des revendications 1 à 5 ou préparé selon la revendication 6 pour la fabrication de revêtements de surface.

8. Utilisation d'au moins un polymère selon l'une des revendications 1 à 5 ou préparé selon la revendication 6 pour la fabrication d'alliages de polymères.

9. Utilisation d'au moins un polymère selon l'une des revendications 1 à 5 ou préparé selon la revendication 6 pour la fabrication de produits par co-extrusion.

10. Utilisation d'au moins un polymère selon l'une des revendications 1 à 5 ou préparé selon la revendication 6 pour la fabrication de matériaux multicouches.

## Claims

1. A polymer consisting of a polyolefin selected from polyethylenes having a density of 0.9 to 0.97 and ethylene copolymers constituted by at least 90 % of ethylene and at most 10 % of a C3-C8 olefin, said polyolefin containing, supported either by the main chain or by a side chain, at least one succinimide ring substituted on the nitrogen atom by a reactive group with formula -R-(X)ₙ where X is a reactive group selected from a hydroxyl group, a carboxylic group, a carboxamide group, a carboxylic acid halide group, a thiol group, a thiocarboxylic group, an amino group, a halogen, an epoxy group, and an esterified carboxylic group in which the ester portion contains a reactive group, n is a number equal to 1 or more and R is a residue containing at least one carbon atom.

2. A polymer according to claim 1, in which group -R- is selected from saturated or unsaturated, substituted or unsubstituted aliphatic hydrocarbons, and substituted or unsubstituted aromatic groups.

3. A polymer according to any one of claims 1 and 2, in which the group -R- is a benzene residue and the group -X is in the position para to the nitrogen atom.

4. A polymer according to any one of claims 1 to 3, in which the group -X is a carboxylic group.

5. A polymer according to any one of claims 1 to 4 in which the polyolefin is a polyethylene having a density of 0.9 to 0.97 and a melt index measured according to standard ASTM D-1238 of 0.2 to 100 under 19.6 kg to 190°C.

6. A process for the preparation of a polymer according to any one of claims 1 to 5, **characterized in that** it is obtained by bringing the molten polyolefin into contact with at least one compound containing a maleimide ring substituted on the nitrogen atom by a reactive group, in a mixer or extruder.

7. Use of at least one polymer according to any one of claims 1 to 5 or prepared according to claim 6 for the production of surface coatings.

8. Use of at least one polymer according to any one of claims 1 to 5 or prepared according to claim 6 for the production of polymer alloys.

9. Use of at least one polymer according to any one of claims 1 to 5 or prepared according to claim 6 for the production of co-extruded products.

10. Use of at least one polymer according to any one of claims 1 to 5 or prepared according to claim 6 for the production of multi-layered products.

## Patentansprüche

1. Polymer, das besteht aus einem Polyolefin, ausgewählt aus Polyethylenen mit einer Dichte von 0,9 bis 0,97 und Ethylen-Copolymeren, die zu mindestens 90 % aus Ethylen und zu höchstens 10 % aus mindestens einem C₃-C₈-Olefin bestehen, wobei das Polyolefin entweder an der Hauptkette oder an einer Seitenkette mindestens einen Succinimid-Ring trägt, der an dem Stickstoffatom substituiert ist durch eine reaktionsfähige Gruppe der Formel -R-(X)ₙ, worin X steht für eine reaktionsfähige Gruppe, ausgewählt aus einer Hydroxylgruppe, einer Carboxylgruppe, einer Carboxamidgruppe, einer Carbonsäurehalogenidgruppe einer Thiolgruppe, einer Thiocarboxylgruppe, einer Aminogruppe, einem Halogenatom, einer Epoxygruppe und einer veresterten Carboxylgruppe, deren Ester-Teil eine reaktionsfähige Gruppe aufweist, n für eine Zahl von ≥ 1 steht und R für einen Rest steht, der mindestens ein Kohlenstoffatom enthält.

2. Polymer nach Anspruch 1, in dem die Gruppe -R- ausgewählt ist aus den substituierten oder unsubstituierten, gesättigten oder ungesättigten aliphatischen Kohlenwasserstoffgruppen und den substituierten oder unsubstituierten aromatischen Gruppen.

3. Polymer nach einem der Ansprüche 1 und 2, in dem die Gruppe -R- für einen Benzolrest steht und die Gruppe -X in der p-Position, bezogen auf das Stickstoffatom, vorliegt.

4. Polymer nach einem der Ansprüche 1 bis 3, in dem die Gruppe -X eine Carboxylgruppe ist.

5. Polymer nach einem der Ansprüche 1 bis 4, in dem das Polyolefin ein Polyethylen mit einer Dichte von 0,9 bis 0,97 und einem Schmelzindex, bestimmt nach der Norm ASTM D-1238, von 0,2 bis 100 bei einer Belastung von 19,6 kg bei 190 °C ist.

6. Verfahren zur Herstellung eines Polymers nach einem der Ansprüche 1 bis 5, **dadurch gekennzeichnet, dass** es hergestellt wird durch Inkontaktbringen des Polyolefins im geschmolzenen Zustand im Innern eines Mischers oder in einem Extruder mit mindestens einer Verbindung, die einen Maleimid-Ring aufweist, der an dem Stickstoffatom durch eine reaktionsfähige Gruppe substituiert ist.

7. Verwendung mindestens eines Polymers nach einem der Ansprüche 1 bis 5 oder eines solchen, das nach Anspruch 6 hergestellt worden ist, zur Herstellung von Oberflächenüberzügen.

8. Verwendung mindestens eines Polymers nach einem der Ansprüche 1 bis 5 oder eines solchen, das nach Anspruch 6 hergestellt worden ist, zur Herstellung von Polymermischungen bzw. -legierungen.

9. Verwendung mindestens eines Polymers nach einem der Ansprüche 1 bis 5 oder eines solchen, das nach Anspruch 6 hergestellt worden ist, zur Herstellung von Produkten durch Koextrusion.

10. Verwendung mindestens eines Polymers nach einem der Ansprüche 1 bis 5 oder eines solchen, das nach Anspruch 6 hergestellt worden ist, zur Herstellung von Mehrschichten-Materialien.
